# EUROPEAN PATENT SPECIFICATION

(11) **EP 3 303 011 B1**
(45) Date of publication and mention of the grant of the patent: **18.12.2019**
(21) Application number: 16744868.7
(22) Date of filing: 26.05.2016
(51) Int. Cl.: B60C 15/02

(54) **DEVICE FOR FIXING A TIRE TO A BICYCLE RIM**
VORRICHTUNG ZUM AUFZIEHEN EINES REIFENS AUF EINE FAHRRADFELGE
DISPOSITIF DE FIXATION D'UN PNEU À UNE JANTE DE BICYCLETTE

(30) Priority: 26.05.2015 IT UB20150866
(43) Date of publication of application: 11.04.2018
(73) Proprietor: Porter Di Lincetto Orietta, 35030 Rubano (PD) (IT)
(72) Inventor: GUIDO, Davide, 35030 Rubano (PD) (IT)
(74) Representative: De Giorgi, Michele
(86) International application number: PCT/IT2016/000137
(87) International publication number: WO 2016/189563

(56) References cited:
- CZ-A3- 20 110 147
- JP-B2- 3 909 467

## Description

The present invention relates to the field of the fixing means, in particular for fixing the tubular tire to the rim of a bicycle.

In detail, in particular, it relates to a double-sided adhesive ribbon-shaped element provided with a reinforcement core, suitable to hold together surfaces of different materials and different elasticity.

On the market there are doubled-sided adhesive tapes which provides for different degrees of adhesive strength; however, such known tapes do not present ideal conditions to be employed in this technical field.

In fact, these known adhesive tapes does not withstand high temperatures, nor the stress due to the continuous rotary movement of the rims of a bicycle during use at high speeds.

The bicycle, in fact, is not always used on perfectly smooth terrain; on the contrary, the terrains to be faced with a bicycle present often obstacles and irregularities of the ground that can stress the adhesive means provided between the rim and the tubular.

Furthermore, sudden braking can make the tubular sliding on the rim, so that the tubular risks to come out of its seat, with obvious negative consequences.

Known devices according to the preamble of appended claim 1 are disclosed in JP3909467 and CZ20110147.

The present invention aims to overcome the drawbacks just mentioned and, in particular, that of providing for a device for fixing a tubular to a bicycle rim that is more durable and reliable compared to the traditional fastening means already present on the market, presenting the same production time.

These and other objects are achieved by a fixing device, according to appended claim 1.

Other specific technical features of the fixing device are contained in the respective dependent claims.

The aims and advantages mentioned above as well as others that will follow, will become apparent from the following description, relating to preferred embodiments of a fixing device according to the present invention, given as a preferred and not limitative example.

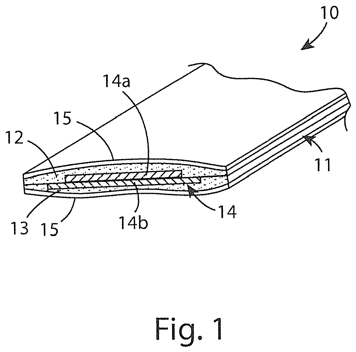

One preferred but not exclusive embodiment is shown, by way of non-limitative example, in the attached figure which illustrates a fixing device according to the present invention, in isometric cutaway view.

The fixing device of the invention is advantageously obtained by staking two double-sided adhesive tapes, as already per se known, of the same width, for example of 20mm in the case of application on rims road.

Preferably, at least one of the double-sided tapes used to obtain the fixing device of the invention is a modified acrylic adhesive material.

The double-sided tapes in modified acrylic adhesive material allow to obtain very high adhesion on a wide variety of materials types of which the rims or tubular can be made up.

Furthermore, this material has a chemical-physical stability and optimal high resistance to high temperatures.

For example, such strips may be packaged on a coating of polyethylene terephthalate (PET abbreviation) and/or with a coating of polypropylene (PP abbreviation).

Advantageously, this allows the coating to be removed without tearing it at the stage of bonding between the adhesive part and the tubular.

The double-sided tapes are preferably joined together, on the face opposite to that of the coating, and mutually centered with respect to its longitudinal median axis.

Advantageously, between the two double-sided adhesive tape is inserted at least one structural ribbon.

In preferred embodiments of the invention, the structural ribbon may comprise several layers, consisting of structural tapes staked one another.

The structural ribbon can be made of polyester or cotton or other textile fibres.

A polyester ribbon advantageously allows optimized grip between the adhesive tape and the structural ribbon itself.

In addition to the above, an acrylic foam backing to form the third layer and in particular a structural ribbon is used.

According to a preferred embodiment of the invention, the structural ribbon is arranged so that its median longitudinal axis is on the median longitudinal axis of the double-sided tapes.

The median longitudinal axis is considered to be an axis extending in the direction of the length of the tape and equidistant from the ride edges of the tape itself.

In particular, to optimize the strength and structural stability of the fixing device, the structural ribbon preferably has a lower maximum overall width compared to that of the double-sided tapes, it has been found that the optimum result is obtained when the maximum overall width of the tape is at least 2 mm less than the width of the double sided adhesive tape.

It is natural that such dimension difference, of about 2 mm, depends on the relative total width of the double-sided tapes and on the length of the fixing device to be obtained.

With particular reference to the attached figure, the fixing device 10 of the invention comprises a body 11 made by staking of the following layers:
- a first layer 12 and a second layer 13, comprising a double-sided tape, each preferably comprising a tacky acrylic adhesive material and advantageously having a first face covered by a removable coating 15, preferably made up of polyethylene terephthalate;
- a structural third layer 14 which advantageously comprises at least a structural ribbon, and preferably made of polyester or pre-washed cotton or other fibers, preferably of about 0.8 mm thickness and advantageously having a lower overall width at least 2 mm narrower than the width of the first 12 and second layer 13, which have a second face to which the third layer 14 is fixed.

In a particular embodiment of the invention, alt the layers are arranged so that the longitudinal axes are staked one on the others located in corresponding positions.

Advantageously, the reinforced double-sided tape according to the invention is packaged with the supports applied to the first 12 and second layer 13 on the opposite sides to the third layer 14 respectively.

In particular, in the embodiment intended for application on rims of mountain type bikes (MTB), the best results are obtained with widths of the first 12 and of the second layer 13 which are preferably of about 25mm, while the measures in width of the third layer 14 are of 15/20 mm. In an alternative embodiment of the invention, the third layer 14 comprises at least two tapes 14a, 14b, having a different width, this allows to obtain a variable thickness of the fixing device 10, which makes it universal, that is adaptable to the rim groove of different manufacturers, having a base of suitable coupling for any tubular.

In this embodiment, preferably the ribbon having larger width may measure 15 mm in the case of application of the road rims, so as to advantageously cover 75% of the surface of the rim to mate with, giving a structural support to the fixing device 10 of the invention.

Similarly, in case of use on rims of mountain bike type bicycle, it has been found out that the best performance can be obtained in the preferred case in which is employed a tape of 20 mm width applied to a 25 mm wide tape.

Moreover in this embodiment, for example, the smaller tape can be 10 mm wide in the case of use for road rims, so as to advantageously improve the tubular support point at the centre of the rim, regardless of the various features of the rim to which it can be applied.

With the same purpose it is possible, in the case in which the application is provided on rims for mountain bike type bicycle, to adopt a ribbon of 15 mm wide on a 25 mm tape.

The body 11 of the fixing device 10 according to the present invention, in accordance with the embodiments described above includes three layers, two of which comprising the double sided adhesive tape and a third interposed between them that comprises the structural ribbon and that can be differently obtained by any other structural element capable of maintaining its size and shape during normal use of the bicycle in which the fixing device 10 is used.

In a preferred embodiment, the third layer 14 is provided with holes in such a way that the first layer 12 and the second layer 13 come into contact through said holes and mutually connect when they are coupled to it. Preferably, the third layer 14 is coated with a primer before being coupled with the first and the second layers 12, 13 so that, once joined together the three layers 12, 13 and 14 form a single body.

Advantageously, a fixing device according to the present invention comprises a coating liner, preferably made of plastic material with a preferred thickness of about 0.08 mm.

This liner preferably covers the surface of the package formed by the layers 12, 13 and 14 combined and advantageously has a cut or a preferential fracture portion extending longitudinally along the layers 12, 13 and 14 and preferably placed in a median position of the free face of the first and/or the second layer 12 and 13.

Preferably, the cut is set in the middle position of the face of the first or second layer 12 or 13, which is intended to receive and support the tubular.

In this way, the liner can be removed from the fixing device when the device is already mounted on the rim with the tubular.

The cut placed in the median position of the face which is intended to receive and support the tubular, allows the removal of the liner by pulling the flaps each from a side of the tubular.

The technical features are therefore clear from the above description of the fixing device, which is the subject matter of the present invention, as are clear the resulting advantages.

It is finally clear that several variations may be made to the fixing device, without departing from scope of the appended claims.

## Claims

1. A fixing device (10) for fastening a tubular member to a bicycle rim comprising a tape shaped body (11) and **characterized in that** said tape shaped body (11) comprises:
- a first double-sided adhesive layer (12),
- a second double-sided adhesive layer (13), and
- a third layer (14) interposed between and secured to said first and second layer and configured to maintain its shape and dimensions under the conditions of use of the bicycle, (13);
wherein said third layer (14) comprises acrylic foam.

2. The fixing device (10) according to claim 1, **characterized in that** said third layer (14) comprises a polyester tape.

3. A fixing device (10) according to claim 1 or 2, **characterized in that** the first and said second layer (13) have a first width, and the third layer (14) has a second width which is lesser than the first width.

4. The fixing device (10) with a layered structure according to one of claims 1-3, **characterized in that** the first layer (12), the second layer (13) and the third layer (14) have a first median longitudinal axis, a second median longitudinal axis and a third median longitudinal axis, respectively, and **in that** the first layer (12), the second layer (13) and the third layer (14) are mutually superimposed so that the first longitudinal axis, the second longitudinal axis and the third longitudinal axis overlap.

5. fixing device (10) according to one of claims 1 - 4, **characterized in that** the third layer (14) comprises at least two tapes (14a, 14b), each having a different width with respect to the other.

6. A fixing device (10) with a layered structure according to one of claims 1-5, **characterized in that** at least one between the first and the second layer (13) comprise a modified acrylic adhesive material.

7. A fixing device (10) with a layered structure according to one of claims 1 - 6, **characterized in that** at least to one among the first and the second layer (13) is applied a coating (15) consisting of protective polyethylene terephthalate, removable to expose an adhesive face of said layer.

## Patentansprüche

1. Befestigungsvorrichtung (10) zum Befestigen eines rohrförmigen Elements an einer Fahrradfelge mit einem bandförmigen Körper (11), und **dadurch gekennzeichnet, dass** der bandförmige Körper (11) aufweist:
- eine erste doppelseitige Klebeschicht (12),
- eine zweite doppelseitige Klebeschicht (13), und
- eine dritte Schicht (14), die zwischen der ersten und der zweiten Schicht angeordnet und daran befestigt ist, und eingerichtet ist, um ihre Form und ihre Abmessungen unter den Nutzungsbedingungen des Fahrrads (13) aufrechtzuerhalten;
- wobei die dritte Schicht (14) einen Acrylschaum aufweist.

2. Befestigungsvorrichtung (10) nach Anspruch 1, **dadurch gekennzeichnet, dass** die dritte Schicht (14) ein Polyesterband aufweist.

3. Befestigungsvorrichtung (10) nach Anspruch 1 oder 2, **dadurch gekennzeichnet, dass** die erste und die zweite Schicht (13) eine erste Breite aufweisen und die dritte Schicht (14) eine zweite Breite aufweist, die kleiner als die erste Breite ist.

4. Befestigungsvorrichtung (10) mit einem Schichtaufbau nach einem der Ansprüche 1 bis 3, **dadurch gekennzeichnet, dass** die erste Schicht (12), die zweite Schicht (13) und die dritte Schicht (14) jeweils eine erste mittlere Längsachse, eine zweite mittlere Längsachse und eine dritte mittlere Längsachse aufweisen, und dadurch, dass sich die erste Schicht (12), die zweite Schicht (13) und die dritte Schicht (14) wechselseitig überlagern, so dass sich die erste Längsachse, die zweite Längsachse und die dritte Längsachse überlappen.

5. Befestigungsvorrichtung (10) nach einem der Ansprüche 1 bis 4, **dadurch gekennzeichnet, dass** die dritte Schicht (14) zumindest zwei Bänder (14a, 14b) aufweist, die jeweils eine unterschiedliche Breite in Bezug auf die andere aufweist.

6. Befestigungsvorrichtung (10) mit einem Schichtaufbau nach einem der vorhergehenden Ansprüche 1 bis 5, **dadurch gekennzeichnet, dass** zumindest eine von der ersten oder zweiten Schicht (13) ein modifiziertes Acrylklebematerial aufweist.

7. Befestigungsvorrichtung (10) mit einem Schichtaufbau nach einem der vorhergehenden Ansprüche 1 bis 6, **dadurch gekennzeichnet, dass** auf zumindest einer von den ersten und zweiten Schichten (13) eine Beschichtung (15) aufgebracht ist, die aus einem schützenden Polyethylenterephthalat besteht, das entfernbar ist, um eine Klebefläche der Schicht freizulegen.

## Revendications

1. Dispositif de fixation (10) pour attacher un élément tubulaire à une jante de bicyclette comprenant un corps en forme de ruban (11) et **caractérisé en ce que** ledit corps en forme de ruban (11) comprend :
- une première couche adhésive à double face (12),
- une deuxième couche adhésive à double face (13), et
- une troisième couche (14) interposée entre lesdites première et deuxième couches et attachée à celles-ci et configurée pour maintenir sa forme et ses dimensions dans les conditions d'utilisation de la bicyclette, (13) ;
dans lequel ladite troisième couche (14) comprend une mousse acrylique.

2. Dispositif de fixation (10) selon la revendication 1, **caractérisé en ce que** ladite troisième couche (14) comprend un ruban en polyester.

3. Dispositif de fixation (10) selon la revendication 1 ou 2, **caractérisé en ce que** la première et ladite deuxième couche (13) ont une première largeur, et la troisième couche (14) a une seconde largeur qui est inférieure à la première largeur.

4. Dispositif de fixation (10) ayant une structure en couches selon l'une quelconque des revendications 1 à 3, **caractérisé en ce que** la première couche (12), la deuxième couche (13) et la troisième couche (14) ont un premier axe longitudinal médian, un deuxième axe longitudinal médian et un troisième axe longitudinal médian, respectivement, et **en ce que** la première couche (12), la deuxième couche (13) et la troisième couche (14) se superposent mutuellement de sorte que le premier axe longitudinal, le deuxième axe longitudinal et le troisième axe longitudinal se chevauchent.

5. Dispositif de fixation (10) selon l'une quelconque des revendications 1 à 4, **caractérisé en ce que** la troisième couche (14) comprend au moins deux rubans (14a, 14b), ayant chacun une largeur différente par rapport à l'autre.

6. Dispositif de fixation (10) ayant une structure en couches selon l'une quelconque des revendications 1 à 5, **caractérisé en ce qu'**au moins l'une entre la première et la deuxième couche (13) comprend une matière adhésive acrylique modifiée.

7. Dispositif de fixation (10) ayant une structure en couches selon l'une quelconque des revendications 1 à 6, **caractérisé en ce qu'**au moins l'une parmi la première et la deuxième couche (13) est recouverte d'un revêtement (15) constitué de polyéthylène téréphtalate protecteur, amovible pour exposer une face adhésive de ladite couche.
